# FASCICULE DE BREVET EUROPEEN

(11) **EP 3 895 294 B1**
(45) Date de publication et mention de la délivrance du brevet: **05.06.2024**
(21) Numéro de dépôt: 19817311.4
(22) Date de dépôt: 12.12.2019
(51) Int. Cl.: H02K 17/16, H02K 7/00

(54) **ROTOR À ARBRE NON TRAVERSANT ET MACHINE ÉLECTRIQUE TOURNANTE ASSOCIÉE**
ROTOR MIT EINER NICHT DURCHGEHENDEN WELLE UND ZUGEHÖRIGE ROTIERENDE ELEKTRISCHE MASCHINE
ROTOR WITH NON-THROUGH SHAFT AND ASSOCIATED ROTARY ELECTRIC MACHINE

(30) Priorité: 14.12.2018 FR 1872969
(43) Date de publication de la demande: 20.10.2021
(73) Titulaire: GE Energy Power Conversion Technology Ltd, Rugby, Warwickshire CV21 1BD (GB)
(72) Inventeur: GALMICHE, Christophe, 54200 TOUL (FR)
(74) Mandataire: Serjeants LLP
(86) Numéro de dépôt international: PCT/EP2019/084834
(87) Numéro de publication internationale: WO 2020/120658

(56) Documents cités:
- EP-A1- 0 609 645
- WO-A1-2018/036760
- DE-A1-102012 110 147
- DE-C- 578 782
- DE-C- 905 044

## Description

La présente invention concerne les machines électriques tournantes à cage d'écureuil ou à rotor bobiné et se rapporte plus particulièrement à un rotor comprenant un arbre non traversant.

La présente invention concerne également une machine électrique tournante comprenant un tel rotor.

Le couple et la puissance développés par une machine électrique tournante dépendent notamment de l'intensité des courants induits traversant les barres conductrices ou les bobines du rotor pour une machine asynchrone ou de l'intensité des courants traversant les bobines du rotor pour une machine synchrone.

Pour augmenter l'intensité des courants traversant le rotor, il est nécessaire d'augmenter la section des barres conductrices ou du fil des bobines.

Le document EP0609645 décrit un rotor feuilleté comprenant un arbre non traversant pour un moteur électrique asynchrone à cage d'écureuil.

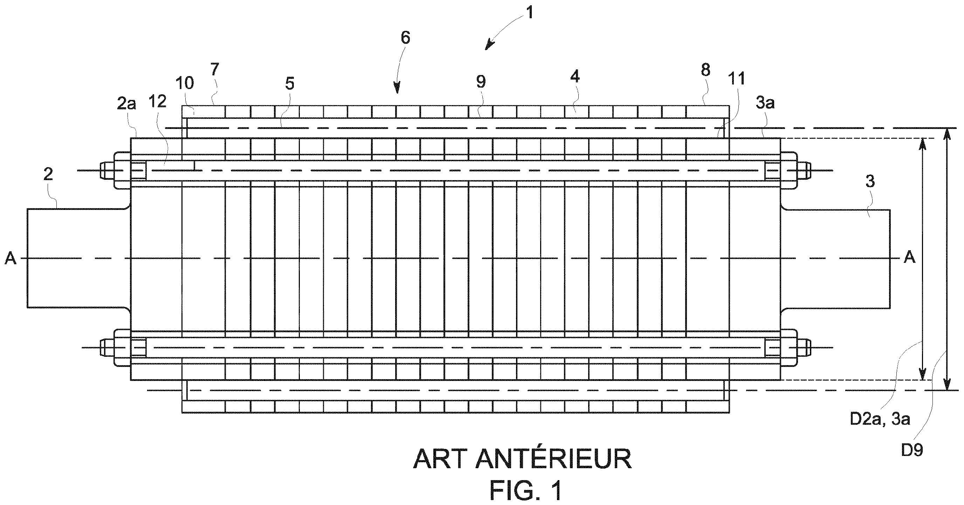

On se réfère à la figure 1 qui représente une coupe d'un tel rotor 1 selon une direction axiale.

Le rotor comprend deux demi-arbres 2 et 3 entre lesquels sont insérées des tôles magnétiques 4 maintenues compactées par des tirants 12 reliant les deux demi-arbres 2 et 3.

Les tôles magnétiques 4 forment la masse magnétique 6 du rotor.

Chaque demi-arbre 2, 3 comprend une bride de fixation 2a, 3a de diamètre extérieur D2a,3a et reliée à la masse magnétique 6 par l'intermédiaire de couronnes ou disques de court-circuit identiques 7 et 8.

Des barres conductrices 5 sont logées dans des logements 9 insérés dans la masse magnétique 6 et répartis uniformément sur un diamètre D9 de la masse magnétique et dans des trous 10 et 11 insérés dans les couronnes ou disques de court-circuit 7 et 8 pour former une cage d'écureuil.

Les trous circulaires 10 et 11 sont sensiblement coaxiaux aux logements cylindriques 9. Les logements 9 et les trous 10 et 11 sont dimensionnés de sorte que les barres conductrices 5 puissent librement se dilater sous l'effet de la chaleur lorsque les barres sont traversées par un courant électrique.

Le diamètre D9 d'implantation des barres conductrices et des trous 10, 11 est supérieur au diamètre extérieur D2a,3a des brides de fixation 2a, 3a pour insérer les barres conductrices 5 dans les trous 10, 11 et les logements 5.

Pour augmenter la section des barres conductrices 5, il est nécessaire de diminuer le diamètre D2a,3a des brides de fixation 2a, 3a de manière à insérer les barres conductrices 5 dans le rotor 1.

Cependant, les brides de fixation 2a et 3a assurent le compactage de la masse magnétique 6.

Une diminution du diamètre D2a, 3a entraîne un décompactage sur une périphérie de la masse magnétique 6.

La décompaction de la périphérie de la masse magnétique 6 rend le rotor 1 plus souple en flexion entraînant une diminution de sa vitesse critique et de la plage de vitesses d'utilisation du rotor.

Le document DE19956042 divulgue un rotor avec un arbre non traversant pour machine électrique tournante asynchrone comprenant une masse magnétique formée par un empilement de tôles compactées entre deux demi-arbres comprenant des brides de fixation enserrant la masse magnétique et les disques de court-circuit du rotor.

La masse magnétique est maintenue compactée par des tirants reliant les deux demi-arbres.

Le diamètre extérieur des brides de fixation est identique au diamètre extérieur de la masse magnétique logeant des barres conductrices.

La pression de compaction de la masse magnétique est uniforme sur toute la section de la masse magnétique.

Cependant, les barres conductrices sont encapsulées dans la masse magnétique et les disques de court-circuit.

Il n'est pas possible d'insérer les barres conductrices dans la masse magnétique compactée, ni de retirer les barres conductrices de la masse magnétique compactée du rotor sans démontage des tirants.

DE 102012110147 divulgue un rotor comprenant les éléments suivants :
- Rotor à arbre non traversant pour machine électrique tournante.
- Une masse magnétique cylindrique enserrée entre deux demi-arbres comprenant chacun une bride de fixation reliée à la masse magnétique.
- Des logements axiaux étant uniformément pratiqués dans la masse magnétique sur au moins un diamètre de la masse magnétique pour loger des barres conductrices.
- Au moins une bride de fixation comprend des trous d'insertion disposés chacun en regard d'un logement pour insérer les barres conductrices dans les logements.Le diamètre extérieur de la bride de fixation est sensiblement égal au diamètre extérieur de la masse magnétique.
- La bride de fixation comportant autant de trous d'insertion que de logement.
- Le rotor comprend en outre deux couronnes de court-circuit.
- Des barres conductrices insérées dans les logements de sorte que les barres conductrices et les couronnes de court-circuit forment une cage d'écureuil.

DE905044 divulgue un rotor pour machine électrique tournante.

Il est donc proposé de pallier les inconvénients des rotors pour machine électrique tournante à cage d'écureuil ou bobiné selon l'état de la technique.

Au vu de ce qui précède, selon un aspect, il est proposé un rotor à arbre non traversant pour machine électrique tournante selon la revendication 1, comprenant une masse magnétique cylindrique enserrée entre deux demi-arbres comprenant chacun une bride de fixation reliée à la masse magnétique, des logements axiaux étant uniformément pratiqués dans la masse magnétique sur au moins un diamètre de la masse magnétique pour loger des barres conductrices.

Au moins une bride de fixation comprend des trous d'insertion disposés chacun en regard d'un logement pour insérer les barres conductrices dans les logements et le diamètre extérieur de la bride de fixation est sensiblement égal au diamètre extérieur de la masse magnétique, chaque bride de fixation comportant autant de trous d'insertion que de logements.

Selon une caractéristique, le rotor comprend en outre deux disques de court-circuit intercalés entre les brides de fixation des demi-arbres et l'une des extrémités de la masse magnétique, et des barres conductrices insérées dans les logements de sorte que les barres conductrices et les disques de court-circuit forment une cage d'écureuil.

De préférence, les logements sont cylindriques et les trous d'insertion sont circulaires, les logements et les trous étant sensiblement coaxiaux.

Avantageusement, les logements et les trous d'insertion ont une section rectangulaire ou rectangulaire arrondie sensiblement identique.

De préférence, les trous d'insertion débouchent vers la périphérie extérieure du rotor.

Selon une autre caractéristique, le rotor comprend des bobines insérées dans les logements et les trous d'insertion, chaque bobine comprenant plusieurs brins maintenus dans une enveloppe isolante et s'étendant selon la direction axiale de manière à former un rotor bobiné asynchrone ou synchrone.

Avantageusement, les trous d'insertion et les logements sont débouchants selon une direction radiale pour permettre l'insertion des bobines, une cale étant insérée dans la masse magnétique entre chaque bobine et la périphérie extérieure de la masse magnétique pour maintenir la bobine dans son logement.

De préférence, les logements et les trous d'insertion ont une section rectangulaire ou rectangulaire arrondie sensiblement identique.

Selon une autre caractéristique, la masse magnétique comprend des tôles magnétiques compactées.

Avantageusement, la masse magnétique comprend un empilement de plaques métalliques.

De préférence, la masse magnétique comprend un corps métallique.

Selon encore une autre caractéristique, le rotor comprend en outre des vis réparties uniformément sur au moins un diamètre du rotor de manière à maintenir compactée la masse magnétique entre les demi-arbres, le diamètre d'implantation des vis étant inférieur au diamètre d'implantation des logements.

Avantageusement, le rotor comprend en outre des tirants répartis uniformément sur au moins un diamètre du rotor de manière à maintenir compactée la masse magnétique entre les demi-arbres, le diamètre d'implantation des tirants étant inférieur au diamètre d'implantation des logements.

De préférence, la bride de fixation comprend un chanfrein sur sa face opposée à la masse magnétique et s'étendant depuis la périphérie externe de la bride de manière à recouvrir les trous d'insertion.

Avantageusement, la bride de fixation comprend en outre des fraisages répartis uniformément sur le diamètre d'implantation des trous d'insertion de manière à diminuer la longueur des trous d'insertion.

Selon une autre caractéristique, la bride de fixation comprend un évidement périphérique de manière à diminuer la longueur des trous d'insertion.

De préférence, chaque trou d'insertion comprend un taraudage, un bouchon étant vissé dans le taraudage de manière à obturer l'extrémité libre de la bride de fixation.

Avantageusement, chaque trou d'insertion comprend en outre une gorge comprenant un joint de manière à rendre étanche le contact entre le bouchon et la bride de fixation.

De préférence, le bouchon comporte en outre un clapet anti-retour pour dépressuriser le logement.

Selon encore un autre aspect, il est proposé une machine électrique tournante comprenant un rotor tel que défini précédemment.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
[Fig 1], dont il a déjà été fait mention, illustre un rotor comprenant un arbre non traversant d'une machine électrique tournante asynchrone selon l'état de la technique ;
[Fig 2] illustre un mode de réalisation d'une machine électrique tournante à cage d'écureuil ou à rotor bobiné sans arbre traversant ;
[Fig 3] illustre une coupe partielle selon une direction axiale d'un premier mode de réalisation du rotor ;
[Fig 4] illustre une coupe partielle selon une direction axiale d'un deuxième mode de réalisation du rotor ;
[Fig 5] illustre une coupe partielle selon une direction axiale d'un troisième mode de réalisation du rotor ;
[Fig 6] illustre une coupe partielle selon une direction axiale d'un quatrième mode de réalisation du rotor ;
[Fig 7] illustre une coupe partielle selon une direction axiale d'un cinquième mode de réalisation du rotor ;
[Fig 8]
[Fig 9]
[Fig 10]

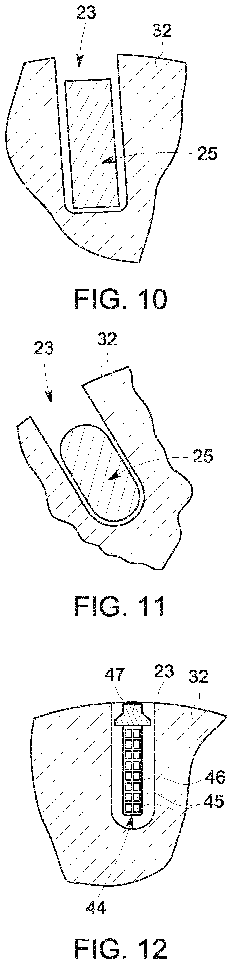

[Fig 11] illustrent des coupes partielles selon une direction transversale d'exemples de section des logements, des trous d'insertion, des barres conductrices et des trous ; et
[Fig 12] illustre une coupe partielle selon une direction transversale d'un sixième mode de réalisation du rotor.

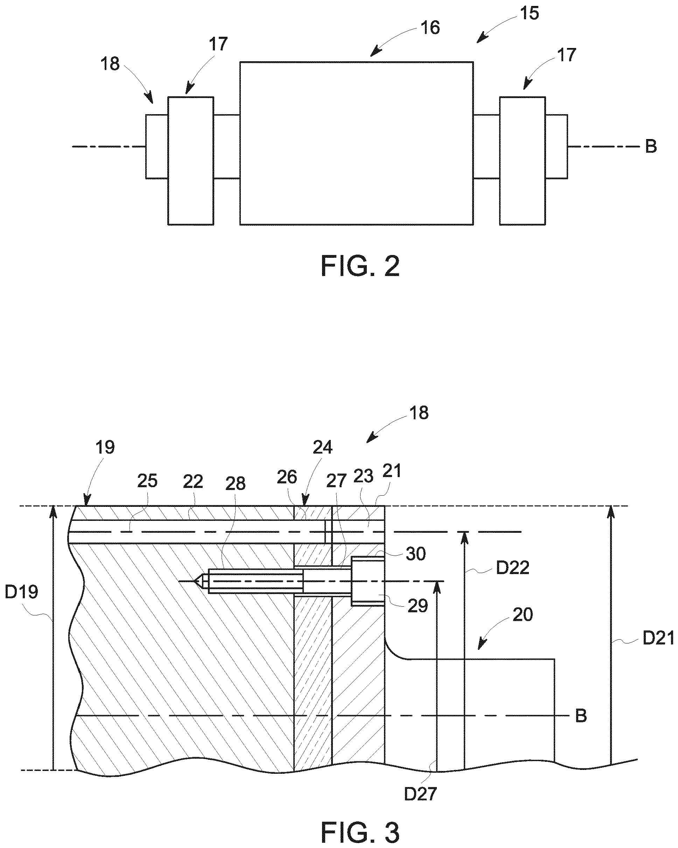

On se réfère à la figure 2 qui illustre un mode de réalisation d'une machine électrique tournante 15 comprenant un stator 16, des paliers 17 et un rotor 18 inséré dans le stator 16 et les paliers 17.

Le rotor 18 comprend un arbre rotorique non traversant réalisé par exemple en acier, d'axe B confondu avec l'axe de rotation du rotor 18.

La figure 3 illustre une coupe partielle selon une direction axiale d'un premier mode de réalisation du rotor 18 comprenant une cage d'écureuil.

Le rotor 18 comprend une masse magnétique 19 cylindrique, de diamètre extérieur D19, enserrée entre deux demi-arbres (un seul demi-arbre 20 étant représenté) au moyen d'une bride 21 de fixation reliée à la masse magnétique.

Des logements 22 axiaux sont uniformément pratiqués dans la masse magnétique 19, selon un diamètre D22 de la masse magnétique.

Ils traversent la masse magnétique selon une direction axiale et sont destinés à loger des barres conductrices 25.

Le diamètre extérieur D21 de la bride de fixation 21 est sensiblement égal au diamètre extérieur D19 de la masse magnétique. Par exemple, le diamètre extérieur D21 de la bride de fixation 21 est égal à une valeur comprise entre 0.95 et 1.03 fois le diamètre extérieur D19 de la masse magnétique, de préférence entre 0.98 et 1 fois le diamètre extérieur D19 de la masse magnétique.

Chaque bride de fixation 21 comporte des trous 23 pour insérer les barres conductrices 25 dans les logements 22.

Chaque bride de fixation 21 comporte autant de trous 23 d'insertion des barres conductrices 25 que de logements 22, chaque trou d'insertion 23 étant disposé en regard d'un logement 22.

Les logements 22 sont cylindriques, et les trous 23 sont circulaires et coaxiaux avec les logements 22.

En variante, les logements 22 et les trous 23 ont une section rectangulaire ou rectangulaire arrondie identique, les sections des logements et des trous étant prévues en regard l'une de l'autre.

Le rotor 18 comprend en outre deux disques de court-circuit 24 intercalés entre les brides 21 de fixation des demi-arbres 20 et l'une des extrémités de la masse magnétique 19, et des barres conductrices 25 insérées dans les logements 22 de sorte que les barres conductrices 25 et les disques de court-circuit 24 forment une cage d'écureuil.

Les logements 22 sont dimensionnés pour compenser la dilatation des barres conductrices 25 sous l'effet de la chaleur générée par le passage du courant dans les barres 25 et ainsi empêcher un balourd thermo-mécanique du rotor provoqué par la dilatation des barres lorsqu'elles ne peuvent pas se dilater librement, notamment dans une direction axiale.

Les disques de court-circuit 24 et les barres conductrices 25 sont réalisés par exemple en cuivre et sont électriquement reliés entre eux pour former une cage d'écureuil lorsque le rotor est animé d'un mouvement de rotation.

Les barres conductrices 25 peuvent être réalisées en cuivre allié, en aluminium, en aluminium allié ou tout autre matériau conducteur électrique.

Chaque disque de court-circuit 24 comprend des trous débouchant 26 dans lesquels sont respectivement logées les barres conductrices 25.

Les extrémités des barres conductrices 25 ne sont pas en contact avec les brides 21 de fixation pour empêcher que les courants traversant les barres conductrices 25 transitent à travers les brides de fixation 21.

Chaque extrémité de barre conductrice s'insère dans un trou d'insertion 23 et un trou 26 avec un jeu radial afin de compenser la dilatation des barres conductrices 25 sous l'effet de la chaleur générée par le passage du courant, et de permettre l'insertion des barres conductrices 25 dans la masse magnétique 19 lorsque la masse magnétique 19 est compactée entre les demi-arbres 20.

Lorsque le rotor 18 est animé d'un mouvement de rotation à une vitesse de par exemple 10000 tours par minute, les barres 25 sont projetées vers l'extérieur de la masse magnétique 19 sous l'effet de la force centrifuge.

Les barres 25 viennent en contact avec les disques de court-circuit 24 créant une connexion électrique entre les barres 25 et les disques de court-circuit 24 formant la cage d'écureuil.

La masse magnétique 19 comprend un corps métallique.

Des vis 27 sont uniformément réparties sur un diamètre D27 du rotor 18 de manière à maintenir compactée la masse magnétique 19 entre les demi-arbres 20.

Le diamètre d'implantation D27 des vis 27 est inférieur au diamètre d'implantation D22 des logements 22.

Les vis 27 sont en prise dans des taraudages 28 de la masse magnétique 19.

La tête 29 des vis 27 peut être logée dans un lamage 30 de la bride de fixation 21.

Les barres conductrices 25 peuvent être insérées et retirées de la masse magnétique 19 sans démontage du rotor 18.

En outre, comme le diamètre D21 des brides de fixation 21 est sensiblement égal au diamètre extérieur D19 de la masse magnétique 19, la compaction de la masse magnétique 19 est uniforme sur l'ensemble de la section de la masse magnétique sans décompaction de la périphérie de la masse magnétique de sorte que le rotor 18 soit plus rigide en flexion pour des vitesses de rotation plus élevées.

En variante, le rotor 18 peut comprendre des barres conductrices 25 réparties sur plusieurs diamètres de la masse magnétique 19, les disques de court-circuit 24 et les brides de fixation 21 comportant des trous et des trous d'insertion en regard de chaque logement 22 pour insérer et retirer les barres conductrices 25.

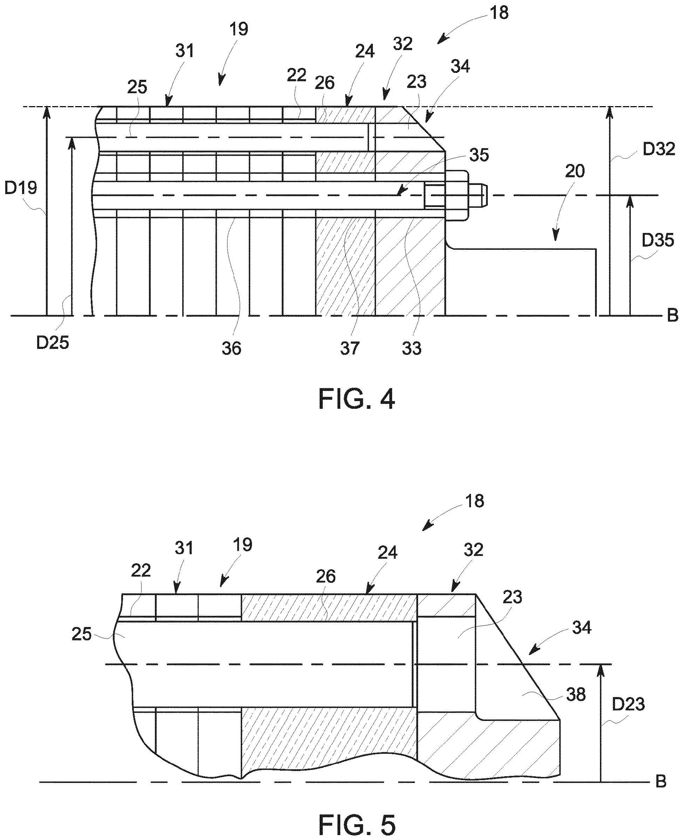

La figure 4 illustre une coupe partielle selon une direction axiale d'un deuxième mode de réalisation du rotor 18.

On retrouve la masse magnétique 19 réalisée à partir de tôles magnétiques 31, le disque de court-circuit 24 et le demi-arbre 20.

La barre conductrice 25 est insérée dans le logement 22 de la masse magnétique 19 et dans le trou 26 du disque de court-circuit 24.

Le demi-arbre 20 comprend une bride de fixation 32 de diamètre extérieur D32 est sensiblement égal au diamètre extérieur D19 de la masse magnétique 19. Par exemple, le diamètre extérieur D32 est égal à une valeur comprise entre 0.95 et 1.03 fois le diamètre extérieur D19 de la masse magnétique, de préférence comprise entre 0.98 et 1 fois le diamètre extérieur D19 de la masse magnétique.

La bride de fixation 32 comprend le trou d'insertion 23, un trou de passage 33, et un chanfrein 34 sur sa face opposée à celle en regard de la masse magnétique 19, qui s'étend depuis sa périphérie externe de manière à recouvrir le trou d'insertion 23.

Le chanfrein 34 réduit la longueur du trou 23 pour faciliter l'insertion de la barre conductrice 25 dans la masse magnétique 19 sans altérer la qualité de compactage du rotor, et réduit la masse du rotor 18. La vitesse critique du rotor 18 est augmentée.

Le rotor 18 comprend en outre des tirants 35 répartis uniformément sur un diamètre D35 du rotor 18 de manière à maintenir compactée la masse magnétique 19 entre les demi-arbres 20.

Le diamètre D35 d'implantation des tirants 35 est inférieur au diamètre D25 d'implantation des logements 25.

Le tirant 35 passe par le trou de passage 33 de la bride de fixation 32, et des passages 36 et 37 pratiqués dans la masse magnétique 19 et dans le disque de court-circuit 24.

En variante, la masse magnétique 19 comprend des plaques métalliques compactées remplaçant les tôles magnétiques compactées.

L'épaisseur des tôles magnétiques 31 est de préférence inférieure à 2 mm, préférentiellement 0.65 mm, par exemple 0.5 mm.

L'épaisseur des plaques métalliques est de préférence supérieure à 5% du diamètre extérieur D19 de la masse magnétique 19.

Selon une autre variante, les plaques métalliques sont reliées entre elles par des vis noyées dans les plaques, et les plaques métalliques situées aux extrémités de la masse magnétique sont reliées aux demi-arbres par des vis noyées dans les brides de fixation.

La figure 5 illustre une coupe partielle selon une direction axiale d'un troisième mode de réalisation du rotor 18.

Ce mode de réalisation diffère du mode de réalisation illustré à la figure 4 en ce que la bride de fixation 32 comprend en outre des fraisages 38 répartis uniformément sur le diamètre D23 d'implantation des trous d'insertion 23 de manière à diminuer la longueur des trous d'insertion.

Les fraisages 38 permettent de retirer une quantité de matière supérieure à celle retirée dans le mode de réalisation précédent pour alléger encore plus le rotor 18 et augmenter la vitesse critique du rotor 18.

Les fraisages 38 facilitent l'insertion des barres conductrices 25 dans la masse magnétique 19, la longueur du trou d'insertion 23 étant plus réduite que dans le mode de réalisation précédent sans altérer la qualité de compactage de la masse magnétique.

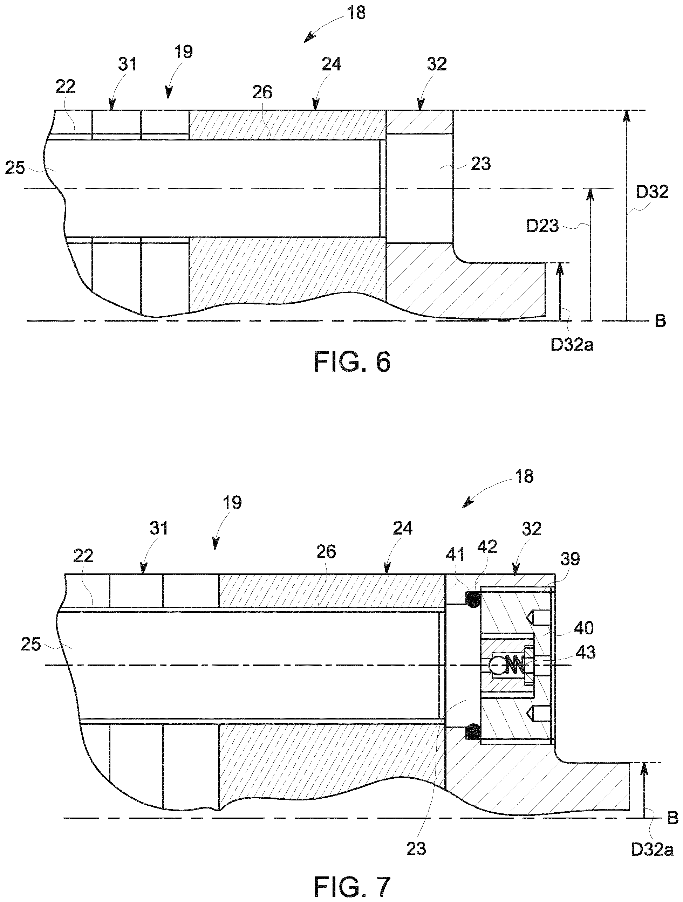

La figure 6 illustre une coupe partielle selon une direction axiale d'un quatrième mode de réalisation du rotor 18.

Ce mode de réalisation diffère du mode de réalisation illustré à la figure 5 en ce que les fraisages 38 de la bride de fixation 32 sont remplacés par un évidement périphérique de manière à diminuer la longueur des trous d'insertion 23.

La bride de fixation 32 comprend une première épaisseur axiale s'étendant de l'axe B jusqu'à un diamètre D32a inférieur au diamètre D23 d'implantation des trous d'insertion 23, et une deuxième épaisseur axiale s'étendant du début de l'évidement périphérique jusqu'au diamètre D32.

La première épaisseur est plus importante que la deuxième épaisseur.

L'évidement permet de retirer une quantité de matière supérieure par rapport à celle retirée dans le mode de réalisation précédent pour alléger le rotor 18 et augmenter la vitesse critique du rotor 18.

L'évidement facilite l'insertion des barres 25 dans la masse magnétique 19, la longueur du trou d'insertion 23 étant réduite sans altérer la qualité du compactage de la masse magnétique.

L'évidement périphérique permet également de réduire le bruit et les pertes de friction, par exemple de l'air, pendant la rotation du rotor 18 par rapport aux modes de réalisation décrits précédemment.

La figure 7 illustre une coupe partielle selon une direction axiale d'un cinquième mode de réalisation du rotor 18.

Ce mode de réalisation diffère du mode de réalisation illustré à la figure 6 en ce que le trou 23 comprend un taraudage 39.

Un bouchon 40 est visé dans le taraudage 39 de manière à obturer l'extrémité libre de la bride de fixation 32.

Le bouchon 40 empêche les bruits de sifflement et les pertes par friction, par exemple de l'air, lorsque le rotor 18 est en rotation.

De plus, le bouchon 40 empêche les phénomènes d'abrasion et d'érosion des trous d'insertion 23 causés par la circulation d'un fluide et par des particules abrasives contenues dans le fluide lorsque le rotor a une vitesse périphérique supérieure par exemple à 150 m/s.

Le trou d'insertion 23 comprend en outre une gorge 41 comprenant un joint 42 de manière à rendre étanche le contact entre le bouchon 40 et la bride de fixation 32.

Le joint 42 limite la détérioration des barres conductrices 25 lorsque le rotor 18 est utilisé dans un environnement chimiquement agressif.

Le joint 42 est de préférence torique, en inox, en polymère ou métallique, de préférence d'une seule pièce sans coupure ou raboutage.

Le bouchon 40 comprend en outre un clapet anti-retour 43 pour dépressuriser le logement 22 en cas de dépressurisation rapide de l'enceinte de la machine électrique tournante, par exemple lorsque celle-ci est utilisée et incorporée dans un motocompresseur.

En variante, le bouchon 40 ne comprend pas de clapet anti-retour 43 et la bride de fixation 32 comprend la gorge 41 comprenant le joint 42.

Selon une autre variante, le bouchon 40 ne comprend pas de clapet anti-retour 43 et la bride de fixation 32 ne comprend pas la gorge 41 ni le joint 42.

Le mode de réalisation avec un bouchon 40 peut également s'appliquer aux autres modes de réalisation décrits aux figures 3 à 5.

Dans les modes de réalisation du rotor 18 décrits précédemment, les logements 22, les trous d'insertion 23, les barres conductrices 25 et les trous 26 du disque de court-circuit 24 ont une section circulaire.

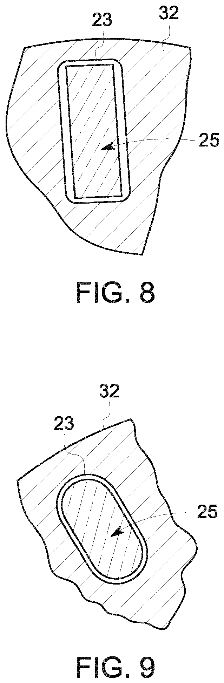

Selon d'autres modes de réalisation, comme représentées aux figures 8 à 11, les sections peuvent être de formes diverses, la section des logements 22, des trous d'insertion 23, des barres conductrices 25 et des trous 26 étant sensiblement identique.

La figure 8 illustre un exemple de section rectangulaire du trou d'insertion 23 et de la barre conductrice 25, et la figure 9 illustre un exemple de section rectangulaire arrondie du trou d'insertion 23 et de la barre conductrice 25.

Les figures 10 et 11 décrivent les sections illustrées aux figures 8 et 9 débouchant vers la périphérie extérieure du rotor facilitant l'accès aux barres 25 par l'ouverture radiale extérieure du trou d'insertion 23.

De plus, la masse du rotor est allégée augmentant la vitesse critique du rotor sans altérer la qualité du compactage de la masse magnétique.

Les modes de réalisation du rotor 18 décrits précédemment comportent des disques de court-circuit et des barres conductrices formant une cage d'écureuil.

Comme illustré à la figure 12, illustrant un sixième mode de réalisation du rotor 18, les barres conductrices 25 peuvent être remplacées par des bobines 44 et les disques de court-circuit 24 sont retirés du rotor 18 de sorte que les brides de fixation 21, 32 viennent en contact avec la masse magnétique 19.

Les bobines 44 sont insérées dans les logements 22 et les trous d'insertion 23.

Chaque bobine 44 comprend plusieurs brins 45 conducteurs électriques maintenus dans une enveloppe isolante 46 et s'étendant selon la direction axiale, les brins 45 étant reliés entre eux après avoir traversé la bride de fixation 21, 32 de manière à former un rotor asynchrone bobiné.

En variante, les brins 45 sont reliés à une bague conductrice pour former un rotor synchrone bobiné à masse magnétique sans arbre traversant.

Les trous 23 d'insertion des bobines 44 et les logements 22 sont débouchant selon une direction radiale pour permettre l'insertion des bobines 44.

Une cale 47 est insérée dans la masse magnétique 19 entre chaque bobine 44 et la périphérie extérieure de la masse magnétique 19 pour maintenir la bobine 44 dans son logement 22.

Bien entendu, chaque demi-arbre peut comprend une bride de fixation selon un mode de réalisation différent tel que décrit précédemment.

En variante, un premier demi-arbre peut comprendre une bride de fixation selon un mode de réalisation décrit précédemment et un deuxième demi-arbre comprend une bride de fixation ne comprenant pas de trous d'insertion 23.

Le rotor 18 a une compaction uniforme de sa masse magnétique sans décompaction en périphérie assurant une plus grande rigidité en flexion et des vitesses de rotation plus élevées qu'un rotor de l'état de la technique, tout en maintenant un accès libre aux barres conductrices ou bobines.

De plus, les barres conductrices 25 ont une section plus importante et/ou le rotor comprenant une, deux ou plusieurs rangées de barres conductrices réparties uniformément sur plusieurs diamètres de la masse magnétique sans altérer la compaction et la rigidité en flexion de la masse magnétique permettant de réaliser des machines électriques tournantes de plus forte puissance.

## Revendications

1. Rotor (18) à arbre non traversant pour machine électrique tournante, comprenant une masse magnétique cylindrique (19) enserrée entre deux demi-arbres (20) comprenant chacun une bride de fixation (21) reliée à la masse magnétique, des logements (22) axiaux étant uniformément pratiqués dans la masse magnétique sur au moins un diamètre (D22) de la masse magnétique pour loger des barres conductrices (25), au moins une bride de fixation comprenant des trous (23) d'insertion disposés chacun en regard d'un logement pour insérer les barres conductrices dans les logements et le diamètre extérieur (D21) de la bride de fixation est sensiblement égal au diamètre extérieur (D19) de la masse magnétique, la bride de fixation comportant autant de trous (23) d'insertion que de logements, **caractérisé en ce que** le rotor comprend en outre deux disques de court-circuit (24) intercalés entre les brides de fixation (21) des demi-arbres (20) et l'une des extrémités de la masse magnétique (19), et des barres conductrices (25) insérées dans les logements (22) de sorte que les barres conductrices et les disques de court-circuit forment une cage d'écureuil.

2. Rotor selon la revendication 1, dans lequel les logements (22) sont cylindriques et les trous (23) d'insertion sont circulaires, les logements et les trous étant sensiblement coaxiaux.

3. Rotor selon la revendication 1, dans lequel les logements (22) et les trous (23) d'insertion ont une section rectangulaire ou rectangulaire arrondie sensiblement identique.

4. Rotor selon l'une des revendications 1 à 3, dans lequel les trous (23) d'insertion débouchent vers la périphérie extérieure du rotor (18).

5. Rotor selon l'une quelconque des revendications 1 à 4, dans lequel la masse magnétique (19) comprend des tôles magnétiques (31) compactées.

6. Rotor selon l'une quelconque des revendications 1 à 4, dans lequel la masse magnétique comprend un empilement de plaques métalliques, ou un corps métallique.

7. Rotor selon la revendication 6, comportant en outre des vis (27) réparties uniformément sur au moins un diamètre (D27) du rotor de manière à maintenir compactée la masse magnétique (19) entre les demi-arbres (20), le diamètre d'implantation des vis étant inférieur au diamètre d'implantation (D22) des logements (22).

8. Rotor selon l'une des revendications 1 à 6, comportant en outre des tirants (35) répartis uniformément sur au moins un diamètre (D35) du rotor de manière à maintenir compactée la masse magnétique (19) entre les demi-arbres (20), le diamètre d'implantation des tirants étant inférieur au diamètre d'implantation (D22) des logements (22).

9. Rotor selon l'une des revendications 1 à 8, dans lequel la bride de fixation (32) comprend un chanfrein (34) sur sa face opposée à la masse magnétique (19) et s'étendant depuis la périphérie externe de la bride de manière à recouvrir les trous (23) d'insertion.

10. Rotor selon la revendication 9, dans lequel la bride de fixation (32) comprend en outre des fraisages (38) répartis uniformément sur le diamètre d'implantation (D23) des trous (23) d'insertion de manière à diminuer la longueur des trous (23) d'insertion.

11. Rotor selon l'une des revendications 1 à 8, dans lequel la bride de fixation (32) comprend un évidement périphérique de manière à diminuer la longueur des trous (23) d'insertion.

12. Rotor selon l'une quelconque des revendications 1 à 11, dans lequel chaque trou (23) d'insertion comprend un taraudage (39), un bouchon (40) étant vissé dans le taraudage de manière à obturer l'extrémité libre de la bride de fixation (21, 32).

13. Rotor selon la revendication 12, dans lequel chaque trou (23) d'insertion comprend en outre une gorge (41) comprenant un joint (42) de manière à rendre étanche le contact entre le bouchon (40) et la bride de fixation (21, 32).

14. Rotor selon la revendication 13, dans lequel le bouchon (40) comporte en outre un clapet anti-retour (43) pour dépressuriser le logement (22).

15. Machine électrique tournante comprenant un rotor selon l'une quelconque des revendications précédentes.

## Patentansprüche

1. Rotor (18) mit nicht durchgehender Welle für eine rotierende elektrische Maschine, der eine zylindrische Magnetmasse (19) umfasst, die zwischen zwei Halbwellen (20) eingespannt ist, welche jeweils einen Befestigungsflansch (21) umfassen, der mit der Magnetmasse verbunden ist, wobei in der Magnetmasse über mindestens einen Durchmesser (D22) der Magnetmasse axiale Aufnahmen (22) gleichmäßig ausgebildet sind, um Stromschienen (25) aufzunehmen, wobei mindestens ein Befestigungsflansch Einsetzlöcher (23) umfasst, die jeweils einer Aufnahme zugewandt angeordnet sind, um die Stromschienen in die Aufnahmen einzusetzen, und der Außendurchmesser (D21) des Befestigungsflansches im Wesentlichen gleich dem Außendurchmesser (D19) der Magnetmasse ist, wobei der Befestigungsflansch ebenso viele Einsetzlöcher (23) wie Aufnahmen umfasst, **dadurch gekennzeichnet, dass** der Rotor weiter zwei Kurzschlussscheiben (24), die zwischen den Befestigungsflanschen (21) der Halbwellen (20) und einem der Enden der Magnetmasse (19) eingefügt sind, und Stromschienen (25) umfasst, die so in die Aufnahmen (22) eingesetzt sind, dass die Stromschienen und die Kurzschlussscheiben einen Käfigläufer bilden.

2. Rotor nach Anspruch 1, wobei die Aufnahmen (22) zylindrisch sind und die Einsetzlöcher (23) kreisförmig sind, wobei die Aufnahmen und die Löcher im Wesentlichen koaxial sind.

3. Rotor nach Anspruch 1, wobei die Aufnahmen (22) und die Einsetzlöcher (23) einen im Wesentlichen identischen rechteckigen oder abgerundeten rechteckigen Querschnitt aufweisen.

4. Rotor nach einem der Ansprüche 1 bis 3, wobei die Einsetzlöcher (23) zum Außenumfang des Rotors (18) hin münden.

5. Rotor nach einem der Ansprüche 1 bis 4, wobei die Magnetmasse (19) verdichtete Magnetbleche (31) umfasst.

6. Rotor nach einem der Ansprüche 1 bis 4, wobei die Magnetmasse einen Stapel von Metallplatten, oder einen Metallkörper, umfasst.

7. Rotor nach Anspruch 6, der weiter Schrauben (27) umfasst, die gleichmäßig über mindestens einen Durchmesser (D27) des Rotors verteilt sind, um die Magnetmasse (19) zwischen den Halbwellen (20) verdichtet zu halten, wobei der Einbaudurchmesser der Schrauben kleiner ist als der Einbaudurchmesser (D22) der Aufnahmen (22).

8. Rotor nach einem der Ansprüche 1 bis 6, der weiter Zugstangen (35) umfasst, die gleichmäßig über mindestens einen Durchmesser (D35) des Rotors verteilt sind, um die Magnetmasse (19) zwischen den Halbwellen (20) verdichtet zu halten, wobei der Einbaudurchmesser der Zugstangen kleiner ist als der Einbaudurchmesser (D22) der Aufnahmen (22).

9. Rotor nach einem der Ansprüche 1 bis 8, wobei der Befestigungsflansch (32) auf seiner der Magnetmasse (19) gegenüberliegenden Seite eine Fase (34) umfasst, die sich vom Außenumfang des Flansches aus erstreckt, um die Einsetzlöcher (23) abzudecken.

10. Rotor nach Anspruch 9, wobei der Befestigungsflansch (32) weiter Fräsungen (38) umfasst, die gleichmäßig über den Einbaudurchmesser (D23) der Einsetzlöcher (23) verteilt sind, um die Länge der Einsetzlöcher (23) zu verringern.

11. Rotor nach einem der Ansprüche 1 bis 8, wobei der Befestigungsflansch (32) eine Umfangsaussparung umfasst, um die Länge der Einsetzlöcher (23) zu verringern.

12. Rotor nach einem der Ansprüche 1 bis 11, wobei jedes Einsetzloch (23) ein Innengewinde (39) umfasst, wobei ein Stopfen (40) in das Innengewinde geschraubt ist, um das freie Ende des Befestigungsflansches (21, 32) zu verschließen.

13. Rotor nach Anspruch 12, wobei jedes Einsetzloch (23) weiter eine Kehle (41) umfasst, die eine Dichtung (42) umfasst, um den Kontakt zwischen dem Stopfen (40) und dem Befestigungsflansch (21, 32) abzudichten.

14. Rotor nach Anspruch 13, wobei der Stopfen (40) weiter eine Rückschlagklappe (43) umfasst, um die Aufnahme (22) von Druck zu entlasten.

15. Rotierende elektrische Maschine, die einen Rotor nach einem der vorstehenden Ansprüche umfasst.

## Claims

1. Rotor (18) with a non-through shaft for a rotary electric machine, comprising a cylindrical magnetic body (19) clamped between two half-shafts (20) each comprising an attachment flange (21) connected to the magnetic body, axial housings (22) being uniformly provided in the magnetic body on at least one diameter (D22) of the magnetic body in order to house conductive bars (25), at least one attachment flange comprising insertion holes (23) each arranged facing a housing for inserting the conductive bars into the housings and the exterior diameter (D21) of the attachment flange is substantially equal to the exterior diameter (D19) of the magnetic body, the attachment flange comprising as many insertion holes (23) as housings, **characterized in that** the rotor further comprises two short-circuit disks (24) inserted between the attachment flanges (21) of the half-shafts (20) and one of the ends of the magnetic body (19), and conductive bars (25) inserted into the housings (22) in such a way that the conductive bars and the short-circuit disks form a squirrel cage.

2. Rotor according to claim 1, wherein the housings (22) are cylindrical and the insertion holes (23) are circular, the housings and the holes being substantially coaxial.

3. Rotor according to claim 1, wherein the housings (22) and the insertion holes (23) have a rectangular or substantially identical rounded rectangular section.

4. Rotor according to one of claims 1 to 3, wherein the insertion holes (23) open towards the outer periphery of the rotor (18).

5. Rotor according to any one of claims 1 to 4, wherein the magnetic body (19) comprises compacted electrical sheets (31).

6. Rotor according to any one of claims 1 to 4, wherein the magnetic body comprises a stack of metal plates, or a metal body.

7. Rotor according to claim 6, further comprising screws (27) uniformly distributed over at least one diameter (D27) of the rotor so as to keep the magnetic body (19) compacted between the half-shafts (20), the placement diameter of the screws being less than the placement diameter (D22) of the housings (22).

8. Rotor according to one of claims 1 to 6, further comprising tie rods (35) uniformly distributed over at least one diameter (D35) of the rotor so as to keep the magnetic body (19) compacted between the half-shafts (20), the placement diameter of the tie rods being less than the placement diameter (D22) of the housings (22).

9. Rotor according to one of claims 1 to 8, wherein the attachment flange (32) comprises a chamfer (34) on its face opposite the magnetic body (19) and extending from the outer periphery of the flange so as to cover the insertion holes (23).

10. Rotor according to claim 9, wherein the attachment flange (32) further comprises millings (38) uniformly distributed over the placement diameter (D23) of the insertion holes (23) so as to decrease the length of the insertion holes (23).

11. Rotor according to one of claims 1 to 8, wherein the attachment flange (32) comprises a peripheral recess so as to decrease the length of the insertion holes (23).

12. Rotor according to any one of claims 1 to 11, wherein each insertion hole (23) comprises a tapping (39), a plug (40) being screwed into the tapping so as to close off the free end of the attachment flange (21, 32).

13. Rotor according to claim 12, wherein each insertion hole (23) further comprises a throat (41) comprising a seal (42) so as to seal the contact between the plug (40) and the attachment flange (21, 32).

14. Rotor according to claim 13, wherein the plug (40) further comprises a check valve (43) to depressurize the housing (22).

15. Rotary electric machine comprising a rotor according to any one of the preceding claims.
